# EUROPÄISCHE PATENTANMELDUNG

(11) **EP 2 190 086 A2**
(43) Veröffentlichungstag der Anmeldung: **26.05.2010**
(21) Anmeldenummer: 09009754.4
(22) Anmeldetag: 28.07.2009
(51) Int. Cl.: H02B 1/044

(54) **Vorrichtung zur Montage eines Schalters oder dergleichen an einer Montageplatte**

(30) Priorität: 13.11.2008 DE 102008057147
(71) Anmelder: Schaltbau GmbH, 81829 München (DE)
(72) Erfinder: Bauer, Heinz, 84416 Taufkirchen (DE); Bauer, Andreas, 84434 Kirchberg (DE)
(74) Vertreter: Grünecker, Kinkeldey, Stockmair & Schwanhäusser Anwaltssozietät

(57) **Zusammenfassung**

Die Erfindung betrifft eine Vorrichtung zur Montage eines Schalters oder dergleichen an einer Montageplatte. Der Schalter umfasst dabei ein Gehäuse mit einer an der Rückseite der Montageplatte abgestützten Gehäuseoberseite, einem Befestigungsvorsprung mit Befestigungsmitteln, sowie mehreren federnden Zungen mit jeweils einem Rastvorsprung. Der Befestigungsvorsprung und die federnden Zungen werden zur Montage von hinten in eine Öffnung der Montageplatte eingesetzt, wobei die Rastvorsprünge dabei mit dem vorderen Rand der Öffnung verrasten. Die Vorrichtung umfasst ferner ein Befestigungselement, dass von der Vorderseite der Montageplatte aus montiert wird und mit den Befestigungsmitteln des Befestigungsvorsprungs zusammenwirkt. Erfindungsgemäß erstrecken sich die federnden Zungen von der Gehäuseoberseite im Wesentlichen senkrecht und sind von dem Befestigungsvorsprung beabstandet. Zudem sieht die Erfindung vor, dass das Befestigungselement durch eine Hülse gebildet wird, die von der Vorderseite der Montageplatte in die Öffnung der Montageplatte eingesetzt werden kann.

## Beschreibung

Die Erfindung betrifft eine Vorrichtung zur Montage eines Schalters oder dergleichen an einer Montageplatte nach dem Oberbegriff des Patentanspruchs 1. Üblicherweise umfasst der Schalter ein Gehäuse mit einer an der Rückseite der Montageplatte abgestützten Gehäuseoberseite, einem Befestigungsvorsprung mit Befestigungsmitteln, sowie mehreren federnden Zungen mit jeweils einem Rastvorsprung. Zur Montage werden der Befestigungsvorsprung und die federnden Zungen von hinten in eine Öffnung der Montageplatte eingesetzt. Die Rastvorsprünge verrasten dabei mit dem vorderen Rand dieser Öffnung. Die genannte Vorrichtung umfasst außerdem üblicherweise ein Befestigungselement, welches abschließend von der Vorderseite der Montageplatte aus montiert wird und mit den Befestigungsmitteln des Befestigungsvorsprungs zusammenwirkt.

Eine derartige Vorrichtung ist beispielsweise aus DE 28 07 798 C2 bekannt. Der Befestigungsvorsprung ist dort als Hülse ausgeführt. Die federnden Zungen sind Teil der Hülsenwand und umfassen an ihrem oberen Ende jeweils einen Rastvorsprung. Die Hülse sitzt auf der Gehäuseoberseite des Gehäuses, welches hier als Bausteinträger bezeichnet ist. Zur Montage wird die Hülse mit den Rastvorsprüngen von hinten in eine Öffnung der Montageplatte eingesetzt, wobei die Rastvorsprünge mit dem oberen Rand der Öffnung verrasten. Der Bausteinträger wird dabei beispielsweise durch ein federndes Element an der Rückseite der Montageplatte abgestützt. Die Hülse umfasst zudem weitere Rastvorsprünge, die über den oberen Rand der Montageplatte hinausragen. Die weiteren Rastvorsprünge dienen zur Fixierung einer Blende.

Aus DE 82 07 613 U1 ist eine weitere Befestigungsvorrichtung für einen Drehschalter oder dergleichen bekannt. Auch der Befestigungsvorsprung dieser Befestigungsvorrichtung ist als Hülse ausgeführt, die mehrere Rastvorsprünge umfasst, welche hier als Klauen bezeichnet werden. Die Hülse wird von hinten durch eine Bohrung einer als Träger bezeichneten Montageplatte eingesetzt, wobei die Klauen auf der Vorderseite durch Rückfederung einrasten. Auch hier wird vorgeschlagen, dass die Hülse weitere Klauen umfasst, welche über den oberen Rand der Trägerbohrung hinausragen und zur Halterung einer die Trägerbohrung überdeckenden Frontplatte oder eines Zierrings dienen. Der Schalter wird mit einem Spannring gegen die Rückseite des Trägers verspannt.

Ein Nachteil dieser aus dem Stand der Technik bekannten Vorrichtungen ist, dass eine von vorne aufgesetzte Frontplatte oder ein aufgesetzter Zier- bzw. Blendring, auch als Befestigungselement bezeichnet, eine relativ große Materialstärke aufweisen muss, da dieses Befestigungselement von Rastvorsprüngen gehalten wird, die über den oberen Rand der Montageplatte hinausragen. Das Befestigungselement bildet somit eine relativ große Erhebung beispielsweise eines Steuerpults, wodurch das ästhetische Empfinden des Bedieners beeinträchtigt sein kann. Dieser Nachteil kann zudem auch ergonomische Defizite nach sich ziehen. Nachteilig ist außerdem, dass die Zungen der Rastvorsprünge relativ hart gefedert sind, wenn eine gewisse Stabilität der Hülse gewährleistet werden soll, da die Zungen selbst Teil der Hülse sind. Eine Demontage des Schalters ist deshalb schwierig und kann bei entsprechend spröden Materialien auch zu irreparablen Schäden führen. Auch die Montage des Schalters kann sich je nach Ausführung der Montageplatte als schwierig erweisen.

Aufgabe der vorliegenden Erfindung ist es deshalb, eine Vorrichtung zur Montage eines Schalters oder dergleichen an einer Montageplatte anzugeben, welche eine erleichterte Montage bzw. Demontage des Schalters erlaubt. Zudem sollen die weiteren Nachteile des Stands der Technik überwunden werden.

Die Aufgabe wird durch die Merkmale des Anspruchs 1 gelöst. Demnach liegt eine erfindungsgemäße Vorrichtung zur Montage eines Schalters vor, wenn sich die federnden Zungen von der Gehäuseoberseite im Wesentlichen senkrecht erstrecken und von dem Befestigungsvorsprung beabstandet sind, und das Befestigungselement durch eine Hülse gebildet wird, die von der Vorderseite der Montageplatte in die Öffnung der Montageplatte einsetzbar ist. Dadurch ist die Stabilität des Befestigungsvorsprungs von den Zungen der Rastvorsprünge unabhängig. Die Zungen können somit relativ lang ausgeführt sein, womit eine leichte Federung der Zungen verbunden ist. Damit wird die Montage bzw. Demontage des Schalters erleichtert. Durch die erfindungsgemäße Vorrichtung können die Befestigungsmittel zur Halterung des Befestigungselements bzw. der Hülse auch seitlich am Befestigungsvorsprung angebracht sein, wodurch sich die minimale Dicke eines Zierrings oder dergleichen reduziert.

Weitere vorteilhafte Ausgestaltungen der Erfindung sind Gegenstand der Unteransprüche.

In einer bevorzugten Ausführungsform wird die Öffnung der Montageplatte durch eine Bohrung gebildet.

Vorteilhafterweise weist die Hülse für jede Zunge eine Aussparung auf. Dabei erweist es sich als besonders vorteilhaft, wenn der Außendurchmesser der Hülse in etwa dem der Bohrung entspricht und nur ein geringes Spiel zwischen Hülse und Bohrung besteht. Dadurch wird ein guter Sitz der Hülse bzw. auch des Schalters gewährleistet. Alternativ dazu kann der Außendurchmesser der Hülse auch geringer sein, so dass die Hülse in den Spalt zwischen Befestigungsvorsprung und Zungen eingesetzt bzw. eingeschraubt werden kann.

In einer weiteren bevorzugten Ausführungsform ist die Hülse nach Art eines Bajonettverschlusses ausgeführt. Die Befestigungsmittel des Befestigungsvorsprungs werden dabei durch mehrere Nippel gebildet, welche mit entsprechenden Ausnehmungen der Hülse zusammenwirken. Die Hülse wird zuerst durch Einstecken eingesetzt und anschließend mit einer geringen Drehung durch die Nippel des Befestigungsvorsprungs verriegelt und gegen ein Herausfallen gesichert. Vorteilhafterweise weist die Hülse an den Aussparungen keilförmige Fortsätze auf, welche die Zungen der Rastvorsprünge durch die Drehung der Bajonettverriegelung gegen den Rand der Öffnung drücken.

In einer weiteren bevorzugten Ausführungsform umfasst die Hülse einen Zierring. Dieser Zierring ist am oberen Ende der Hülse angeordnet und bildet somit nach der Montage den einzig sichtbaren Teil der Hülse. Vorteilhafterweise dient der Zierring auch zur Abstützung gegen die Vorderseite der Montageplatte. Der Halt des Schalters an der Montageplatte, welcher für die Montage durch die Rastvorsprünge vorerst provisorisch gegeben ist, wird somit durch den Zierring verstärkt. Vorteilhafterweise weist der Zierring deshalb Nuten auf, die zur Aufnahme der Rastvorsprünge dienen. Diese Nuten befinden sich an der Unterseite und somit in der Auflagefläche des Zierrings. Dabei hat es sich als besonders vorteilhaft erwiesen, wenn die Nuten spiralförmig verlaufen, wodurch die Rastvorsprünge bei einer Drehung der Hülse nach außen gedrückt werden. Die Zungen der Rastvorsprünge werden dadurch am Zurückfedern gehindert, wodurch ein Ausrasten der Rastvorsprünge ausgeschlossen wird.

In einer weiteren bevorzugten Ausführungsform sind die Zungen gleichmäßig über den Umfang der Bohrung verteilt angeordnet. Vorzugsweise umfasst das Gehäuse genau vier dieser Zungen. Damit wird durch Einrasten der Rastvorsprünge ein ausreichender provisorischer Halt an der Montageplatte gewährleistet und gleichzeitig eine gute Stabilität der Hülse durch lediglich vier Aussparungen sichergestellt.

In einer weiteren bevorzugten Ausführungsform umfasst die Vorrichtung ferner mehrere im Gehäuse sitzende Gewindestifte. Diese Gewindestifte können durch Drehung aus der Gehäuseoberseite ausgefahren werden und dienen somit zur Abstützung der Gehäuseoberseite an der Rückseite der Montageplatte. Das durch Drehung bedingte Anziehen der Gewindestifte erfolgt üblicherweise als letzter Montageschritt.

Im Folgenden wird ein bevorzugtes Ausführungsbeispiel anhand von Zeichnungen näher erläutert. Es zeigen:
- Figur 1: einen Schalter mit einer erfindungsgemäßen Ausführung von Befestigungsvorsprung und Zungen,
- Figur 2: den in die Öffnung einer Montageplatte eingesetzten Schalter aus Figur 1 mit einer einzusetzenden Hülse,
- Figur 3: eine Seitenansicht des fertig montierten Schalters aus den Figuren 1 und 2, und
- Figur 4: eine Schrägansicht der erfindungsgemäßen Hülse aus den Figuren 2 und 3.

Für die gesamte weitere Beschreibung gilt: sind in einer Figur zum Zweck zeichnerischer Eindeutigkeit Bezugsziffern enthalten, aber im zugehörigen Beschreibungstext nicht erläutert, so wird auf deren Erläuterung in vorangehenden Figurenbeschreibungen Bezug genommen.

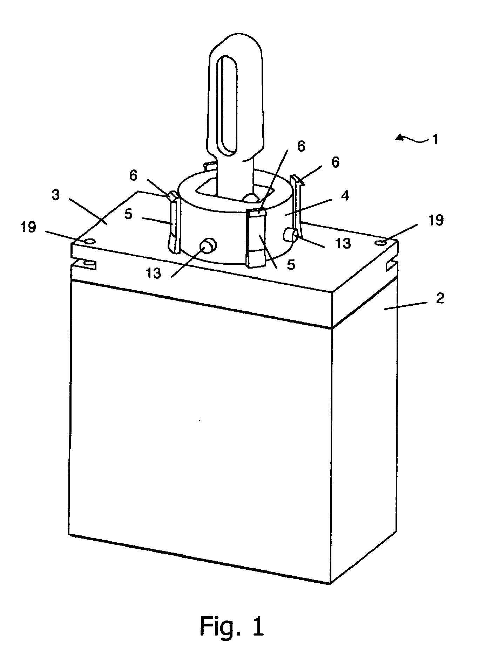

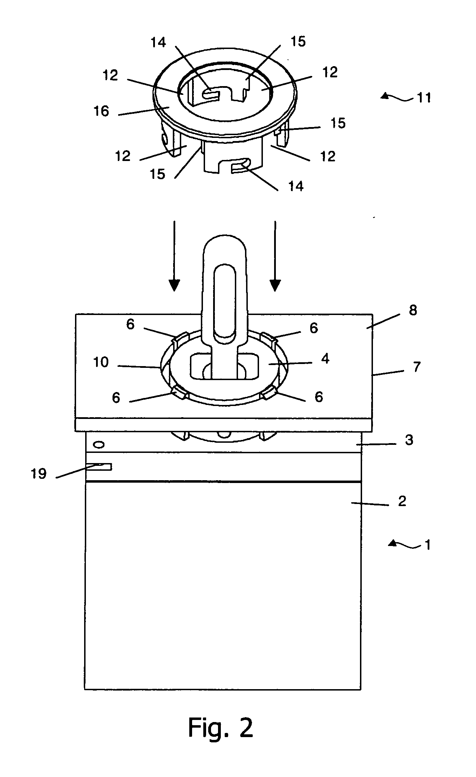

In Figur 1 ist ein Schalter 1 in einer der erfindungsgemäßen Vorrichtung entsprechenden Ausführung in einer Schrägansicht abgebildet. Der Schalter 1 umfasst ein Gehäuse 2 mit einer Gehäuseoberseite 3, einem Befestigungsvorsprung 4 und vier gleichmäßig verteilten federnden Zungen 5 mit jeweils einem Rastvorsprung 6. Der Befestigungsvorsprung 4 ist als kreisrunder Sockel ausgeführt und stellt gleichzeitig das Lager des nicht bezeichneten Bedienhebels des Schalters 1 dar. Die vier federnden Zungen 5 erstrecken sich senkrecht von der Gehäuseoberseite 3 in Richtung der Achse des kreisrunden Befestigungsvorsprungs 4 und sind von diesem beabstandet. Der Befestigungsvorsprung 4 umfasst ferner vier gleichmäßig über den Umfang verteilte Nippel 13, die zur Halterung der erstmalig in Figur 2 abgebildeten und nach Art eines Bajonettverschlusses ausgeführten Hülse 11 dienen. In Figur 1 sind außerdem zwei Aufnehmungen für Gewindestifte mit dem Bezugszeichen 19 versehen.

In Figur 2 ist der Schalter 1 aus Figur 1 bereits im vormontierten Zustand dargestellt. Befestigungsvorsprung 4 und Zungen 5 wurden dazu bereits von hinten in eine Bohrung 10 der Montageplatte 7 eingesetzt. Die am Ende der Zungen 5 angeordneten Rastvorsprünge 6 verrasten dabei mit dem oberen Rand der Bohrung 10 und liegen somit auf der Vorderseite 8 der Montageplatte 7 auf. Figur 2 zeigt ferner die noch einzusetzende Hülse 11. Die Hülse 11 entspricht in ihrem Außendurchmesser ungefähr dem Durchmesser der Bohrung 10 und weist für jede Zunge 5 eine Aussparung 12 auf. Sie kann somit von oben in den Freiraum zwischen dem Rastvorsprung 4 und der Bohrung 10 eingesetzt werden. Dabei greifen die in Figur 1 dargestellten Nippel 13 in die vier Ausnehmungen 14 der Hülse 11 ein. Durch eine anschließende Drehung wird die nach Art eines Bajonettverschlusses ausgeführte Hülse 11 verriegelt. Durch die Drehung werden außerdem die Zungen 5 von den keilförmigen Fortsätzen 15 der Hülse 11 nach außen gegen den Rand der Bohrung 10 gedrückt, wodurch ein mögliches Ausrasten der Rastvorsprünge 6 verhindert wird. Die Hülse 11 umfasst ferner einen Zierring 16, welcher mit seiner Unterseite zumindest teilweise auf der Montageplatte 7 aufliegt. Der provisorische Halt, welcher durch das Einrasten der Rastvorsprünge 6 gegeben ist, wird somit verstärkt.

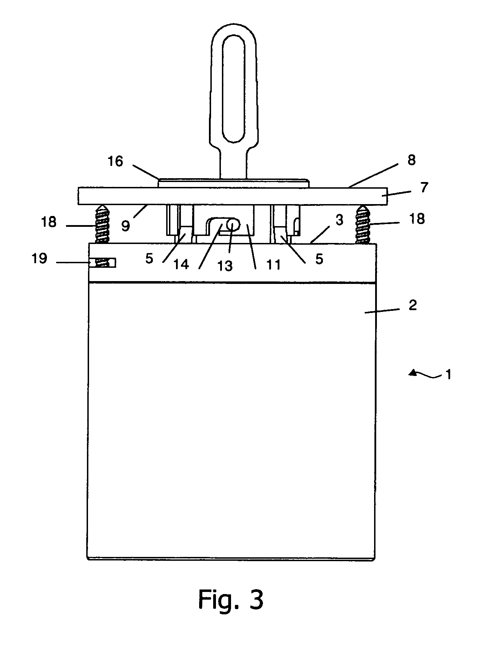

Figur 3 zeigt eine Seitenansicht des fertig montierten Schalters 1 aus den Figuren 1 und 2. In einem letzten Montageschritt wurden die beiden Gewindestifte 18, welche in den Aufnehmungen 19 des Gehäuses 2 sitzen, durch Drehen angezogen und stützen somit den Schalter 1 an der Rückseite 9 der Montageplatte 7 ab.

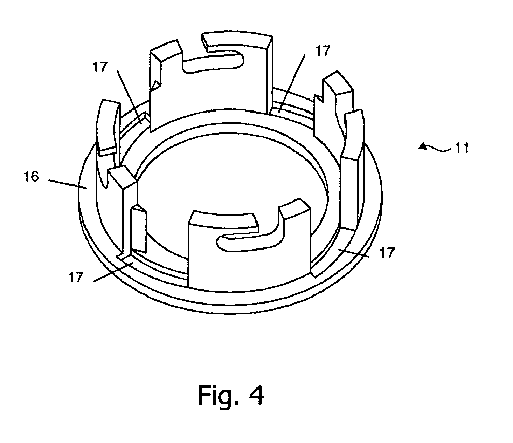

Figur 4 zeigt eine schräge Unteransicht der Hülse 11 aus den Figuren 2 bis 3. Es ist zu erkennen, dass der Zierring 16 an seiner Unterseite vier spiralförmig nach außen weisende Nuten 17 aufweist, die zur Aufnahme der Rastvorsprünge 6 dienen. Durch die spiralförmige Ausgestaltung der Nuten 17 werden die Rastvorsprünge 6 bei der Verriegelung der nach Art eines Bajonettverschlusses ausgeführten Hülse 11 in radialer Richtung nach außen gegen den Rand der Bohrung 10 gedrückt. Die Nuten 17 stellen somit eine weitere Sicherung gegen das Ausrasten der Rastvorsprünge 6 dar.

## Patentansprüche

1. Vorrichtung zur Montage eines Schalters (1) oder dergleichen an einer Montageplatte (7), folgende Merkmale aufweisend:
Der Schalter (1) umfasst ein Gehäuse (2) mit einer an der Rückseite (9) der Montageplatte (7) abgestützten Gehäuseoberseite (3), einem Befestigungsvorsprung (4) mit Befestigungsmitteln, sowie mehreren federnden Zungen (5) mit jeweils einem Rastvorsprung (6), wobei der Befestigungsvorsprung (4) und die federnden Zungen (5) zur Montage von hinten in eine Öffnung der Montageplatte (7) einsetzbar sind und die Rastvorsprünge (6) dabei mit dem vorderen Rand der Öffnung verrasten;
Die Vorrichtung umfasst ferner ein Befestigungselement, das von der Vorderseite (8) der Montageplatte (7) montierbar ist und mit den Befestigungsmitteln des Befestigungsvorsprungs (4) zusammenwirkt;
**dadurch gekennzeichnet, dass**
sich die federnden Zungen (5) von der Gehäuseoberseite (3) im wesentlichen senkrecht erstrecken und von dem Befestigungsvorsprung (4) beabstandet sind, und das Befestigungselement durch eine Hülse (11) gebildet wird, die von der Vorderseite (8) der Montageplatte (7) in die Öffnung der Montageplatte (7) einsetzbar ist.

2. Vorrichtung nach Anspruch 1, **dadurch gekennzeichnet, dass** die Öffnung eine Bohrung (10) ist.

3. Vorrichtung nach einem der Ansprüche 1 oder 2, **dadurch gekennzeichnet, dass** die Hülse (11) je eine Aussparung (12) pro Zunge (5) aufweist.

4. Vorrichtung nach Anspruch 3, **dadurch gekennzeichnet, dass** die Hülse (11) einen Außendurchmesser aufweist, welcher zur Bohrung (10) ein geringes Spiel hat.

5. Vorrichtung nach einem der vorstehenden Ansprüche 3 oder 4, **dadurch gekennzeichnet, dass** die Hülse (11) nach Art eines Bajonettverschlusses ausgeführt ist, wobei die Befestigungsmittel des Befestigungsvorsprungs (4) durch mehrere Nippel (13) gebildet werden, welche mit entsprechenden Ausnehmungen (14) der Hülse (11) zusammenwirken und die Hülse (11) im eingesetzten und durch Drehung verriegelten Zustand gegen ein Herausfallen sichern.

6. Vorrichtung nach Anspruch 5, **dadurch gekennzeichnet, dass** die Hülse (11) an den Aussparungen (12) keilförmige Fortsätze (15) aufweist, welche die Zungen (5) bei der Drehung gegen den Rand der Öffnung zu drücken suchen.

7. Vorrichtung nach einem der vorstehenden Ansprüche, **dadurch gekennzeichnet, dass** die Hülse (11) einen Zierring (16) umfasst.

8. Vorrichtung nach Anspruch 7, **dadurch gekennzeichnet, dass** der Zierring (16) zur Abstützung gegen die Vorderseite (8) der Montageplatte (7) dient.

9. Vorrichtung nach Anspruch 8, **dadurch gekennzeichnet, dass** der Zierring (16) Nuten (17) aufweist, die zur Aufnahme der Rastvorsprünge (6) dienen.

10. Vorrichtung nach Anspruch 9, **dadurch gekennzeichnet, dass** die Nuten (17) spiralförmig in radialer Ausdehnung des Zierrings (16) ausgebildet sind und die Rastvorsprünge (6) bei einer Drehung der Hülse (11) in radialer Richtung nach außen zu drücken suchen.

11. Vorrichtung nach einem der vorstehenden Ansprüche 2 bis 10, **dadurch gekennzeichnet, dass** die Zungen (5) gleichmäßig über den Umfang der Bohrung (10) verteilt angeordnet sind.

12. Vorrichtung nach Anspruch 11, **dadurch gekennzeichnet, dass** das Gehäuse (2) genau vier Zungen (5) aufweist.

13. Vorrichtung nach einem der vorstehenden Ansprüche, **dadurch gekennzeichnet, dass** die Vorrichtung ferner mehrere im Gehäuse (2) sitzende Gewindestifte (18) umfasst, die durch Drehung aus der Gehäuseoberseite (3) ausfahrbar sind und zur Abstützung der Gehäuseoberseite (3) an der Rückseite (9) der Montageplatte (7) dienen.
